# EUROPEAN PATENT APPLICATION

(11) **EP 4 759 632 A1**
(43) Date of publication of application: **17.06.2026**
(21) Application number: 24220006.1
(22) Date of filing: 13.12.2024
(51) Int. Cl.: B60Q 1/00, B60S 1/08, B60S 1/56, G01S 13/931, B60R 11/04, B60S 1/02

(54) **LUMINOUS DEVICE FOR AN AUTOMOTIVE VEHICLE**

(71) Applicant: Valeo Vision, 93012 Bobigny Cedex (FR)
(72) Inventor: CAZALLA, Jesus-David, 23600 MARTOS (ES); SANCHEZ-MELERO, Miguel-Angel, 23600 MARTOS (ES); PARRAS-GODINO, Antonio, 23600 MARTOS (ES); JURADO, Lorenzo, 23600 MARTOS (ES)
(74) Representative: Valeo Visibility

(57) **Abstract**

This invention presents a luminous device (10) for an automotive vehicle. This luminous device (10) comprises a housing (1) with a main opening and an outer lens (2) coupled in the main opening, defining an interior housing space (3). Inside the interior housing space (3) there is at least one luminous module (4), an image acquisition element (5), a sensor element (6) and a cleaning element (7) configured to operate on the outer lens (2) of the image acquisition element (5). The housing (1) comprises a first auxiliary opening (8) covered by a detachable cap, wherein the sensor element (6) is able to be put through the first auxiliary opening. The outer lens (2) comprises a second auxiliary opening (25), wherein the image acquisition element (5) and/or the cleaning element (7) is able to be put through the second auxiliary opening (25) and secured on the housing (1).

## Description

### FIELD OF THE INVENTION

This invention is related to the field of automotive lighting, and more particularly, to the improvement of the interior arrangement of multiple devices on the headlamp, especially the configuration of the interior elements of the same.

### BACKGROUND OF THE INVENTION

Automotive lighting market can be considered one of the most competitive in the world and new lighting functionalities are constantly required.

Current lighting functionalities include cameras and sensors. These elements are usually incorporated into the structure of the vehicle, but they are difficult to replace. The need of this replacement may be caused by damages or malfunctioning of the same.

However, a simple replacement design is not enough, since the place and relative location of each element with the rest of the elements of the vehicle are crucial for the operation of the whole assembly.

A solution for this is sought.

### BRIEF DESCRIPTION OF THE INVENTION

The present invention overcomes the above limitations of the prior art, by providing a luminous device for an automotive luminous device according to the invention.

In a first inventive aspect, the invention provides a luminous device for an automotive vehicle, the luminous device comprising:
a housing comprising a main opening
an outer lens coupled in the main opening of the housing, wherein the housing and the outer lens define an interior housing space;
at least one luminous module comprising at least one light source and arranged in the interior housing space;
an image acquisition element, wherein at least a portion of the image acquisition element is arranged in the interior housing space, wherein the image acquisition element comprises a focusing lens;
a sensor element arranged in the interior housing space;
a cleaning element configured to operate on the focusing lens of the image acquisition element;
wherein
the housing comprises a first auxiliary opening covered by a detachable cap, wherein the sensor element is able to be put through the first auxiliary opening; and
the outer lens comprises a second auxiliary opening, wherein the image acquisition element and/or the cleaning element is able to be put through the second auxiliary opening and secured on the housing.

This luminous device provides different functionalities but offers the possibility to replace the different elements when needed, due to manufacturer's option or due to damage produced in any of the components. The image acquisition element can be extracted across the second auxiliary opening and the sensor element can be extracted across the first auxiliary opening. This is the most advantageous way of providing this exchangeability of elements, since it does not alter the vision field of the sensor element and does not affect to the vision field of the image acquisition element.

In some particular embodiments,
the second auxiliary opening is covered by a support element;
the support element comprises a main frame suitable for being adapted to the second auxiliary opening, a first hole and a second hole;
the image acquisition element is fixed to the support element and is arranged to access the exterior of the luminous device through the first hole;
the cleaning element is fixed to the support element and is arranged to access the exterior of the luminous device through the second hole.

The image acquisition element may be directly fixed to the support element due to its low weight. The cleaning element is fixed to the support element since it needs a bigger support surface to be fixed.

In some particular embodiments,
the cleaning element comprises a main barrel and an auxiliary part;
the main barrel is clipped to the auxiliary part; and
the auxiliary part is screwed to the outer lens.

The auxiliary part may be designed to support the main barrel and to transmit the forces to the outer lens. The main barrel is configured to perform the cleaning operations, while the auxiliary part is designed to absorb any tolerance in the size of the main barrel, which is usually manufactured following diverse criteria. Due to the interposition of the auxiliary part, constructive tolerances are met.

In some particular embodiments,
the outer lens is a multi-material injection moulding part, comprising a main portion and a secondary portion; and
the auxiliary part is screwed to the secondary portion of the outer lens.

Multi-material injection moulding allows obtainment of a polymeric part comprising two different substances in a single process. This secondary portion allows a better positioning and attachment of the cleaning element.

In some particular embodiments,
the outer lens comprises a first face facing towards the interior housing space and a second face opposite to the first face facing towards the exterior of the luminous device
the luminous device further comprises a foil installed on the first face of the outer lens;
the luminous device further comprises an opaque layer installed on a portion of the foil
the luminous device further comprises a plurality of heating wires embedded between the first face of the outer lens and the foil.

The additional foil allows the embedded installation of additional heating wires, which may be used to clean the portion which is in front of the sensor element by applying local heat to the zone, thus eliminating fog or ice or water from this zone.

In some particular embodiments, the foil has a thickness comprised between 0.35 mm and 0.4 mm.

With this data, the foil does not affect to the operation of the sensor element which is placed behind the outer lens.

In some particular embodiments, the heating wires have a diameter comprised between 0.1 and 0.2 mm and the distance between two adjacent wires is comprised between 4 and 6 mm.

This range provides a good compromise between heating power and small affection to the operation of the sensor element.

In some particular embodiments, the sensor element is configured to emit a wave cone and the opaque layer is installed on a first portion of the foil, wherein the first portion of the foil includes the boundary of the second auxiliary opening and also includes a coverage area of the sensor element, wherein the coverage area of the sensor element is the intersection of the wave cone emitted by the sensor element and the foil.

The sensor element is in these embodiments configured to emit a wave cone, which may be a light cone or, in general, a cone of electromagnetic waves, which is emitted by the sensor element so that some of these waves are reflected, so that information is acquired by the sensor element. The opaque layer may prevent stray light and, at the same time, allowing the operation of the sensor element.

In some particular embodiments, the opaque layer is made of a material which has a relative permittivity comprised between 3.9 and 4.0. In some particular embodiments, the opaque layer is made of a material which has a dissipation factor between 0.04 and 0.05.

These values are optimal in the compromise of allowing the operation of the sensor element and improving the behaviour against stray light.

The relative permittivity (also known as dielectric constant) is the permittivity of a material expressed as a ratio with the electric permittivity of a vacuum. A dielectric is an insulating material, and the dielectric constant of an insulator measures the ability of the insulator to store electric energy in an electrical field.

The dissipation factor (DF) is a measure of loss-rate of energy of a mode of oscillation (mechanical, electrical, or electromechanical) in a dissipative system.

In some particular embodiments, the housing comprises a main connector, and the sensor element and the heating wires are electrically connected to the main connector.

This allows an optimal cable routing, allowing the additional element (heating wires) to be electrically fed without involving more complexity in the cable routing of the luminous device. In some particular embodiments, the light source is a solid-state light source, such as a light emitting diode.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas. These light sources are specifically advantageous, since they provide the required luminous properties for the automotive regulations with a high efficiency and reliability.

In some particular embodiments, the sensor element is a LiDAR or a RADAR.

These elements have proved to be accurate in receiving information about the environment surrounding the vehicle.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### DESCRIPTION OF THE DRAWINGS

The foregoing and other features and advantages will be more fully understood from the detailed description of the invention, as well as from examples referring to the attached figures, which are described in the following paragraphs, wherein:
Figure 1 shows a perspective view of some elements of a luminous device according to the present invention.
Figure 2 shows a perspective view of the luminous device of Figure 1, with the outer lens coupled in the main opening of the housing.
Figure 3 shows a detail of the support element of a luminous device according to the present invention.
Figure 4 shows a rear view of a luminous device according to the present invention.
Figure 5 shows a top view of a luminous device according to the present invention, which has been cut to show some relevant elements of the same.

### DETAILED DESCRIPTION OF THE INVENTION

The detailed description of the present invention to be described below refers to the accompanying drawings, which illustrate specific embodiments in which the present invention may be implemented. These embodiments will be described in detail sufficient to enable those skilled in the art to implement the present invention. It should be understood that various embodiments of the present invention are different from each other but need not be mutually exclusive. Accordingly, the detailed description to be described below is not intended to be taken in a limiting meaning, and the scope of the present invention, if properly described, is limited only by the appended claims, in addition to all scopes equivalent to those claimed by the appended claims. In the drawings, reference numerals refer to the same or similar functions over several aspects.

Hereinafter, preferred embodiments of the present invention will be described in more detail with reference to the accompanying drawings.

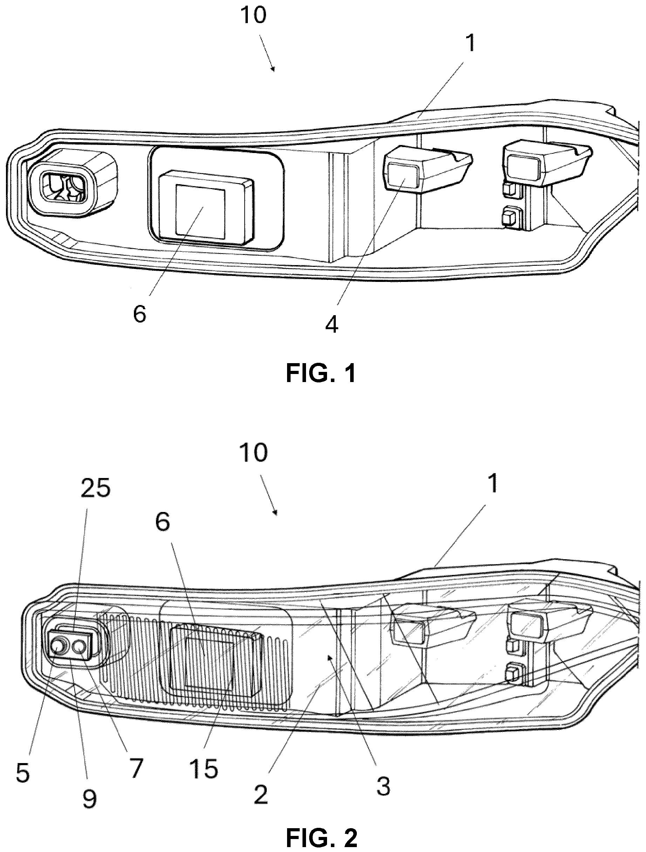

Figure 1 shows a perspective view of some elements of a luminous device 10 according to the present invention.

In this view, the luminous device 10 comprises a housing 1 comprising a main opening. This main opening is intended to be closed by an outer lens that will be shown in a subsequent figure. In this Figure 1, this outer lens is not shown, so that the elements inside the housing may be appreciated in a clearer way.

Inside the housing 1 there is a luminous module 4 and a hollow space to receive an image acquisition element, which in some embodiments, is a camera, as will be seen in Figure 2.

There is also a sensor element 6, which in some embodiments is a LiDAR or a RADAR. The device also comprises a cleaning element configured to clean the camera and its outer lens, which will also be seen in Figure 2. The luminous module 4 comprises a plurality of LEDs, which are intended to provide lighting and signalling functions for the automotive vehicle.

Figure 2 shows a perspective view of the luminous device 10 of Figure 1, with the outer lens 2 coupled with the main opening of the housing 1, thus defining an interior housing space 3.

A portion of the camera 5, in particular its focusing lens, protrudes away from the interior housing space 3, to increase the field of view of the same. A portion of the cleaning element 7 also protrudes from the surface of the outer lens 2 so that it is able to clean the focusing lens of the camera 5.

This arrangement is enabled by a second auxiliary opening 25 which is made in the outer lens 2. This second auxiliary opening 25 is configured such that the camera 5 and the cleaning element 7 are able to be put through it. The outer lens 2 having the second auxiliary opening 25, enables the image acquisition element and/or the cleaning element to be put through the second auxiliary opening 25 and secured on the housing 1.

In this figure, the second auxiliary opening 25 is covered with a support element 9, which is inserted in the second auxiliary opening 25 and is secured on the housing 1. The housing 1 and the outer lens 2 provides support for the insertion of the camera 5 and the cleaning element 7.

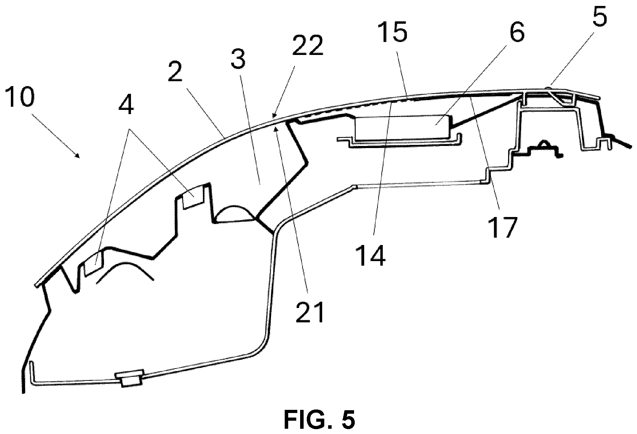

This figure also shows a plurality of heating wires 15 that are embedded in a zone of the outer lens 2 that is arranged in front of a sensor element 6. The heating wires 15 are provided between a first face and a second face of the outer lens 7 that will be explained later with reference to figure 5. The heating wires 15 enable the various components present inside the luminous device 10 to withstand adverse weather conditions such as fog, snow etc that may have an impact on the output and function of the headlamp.

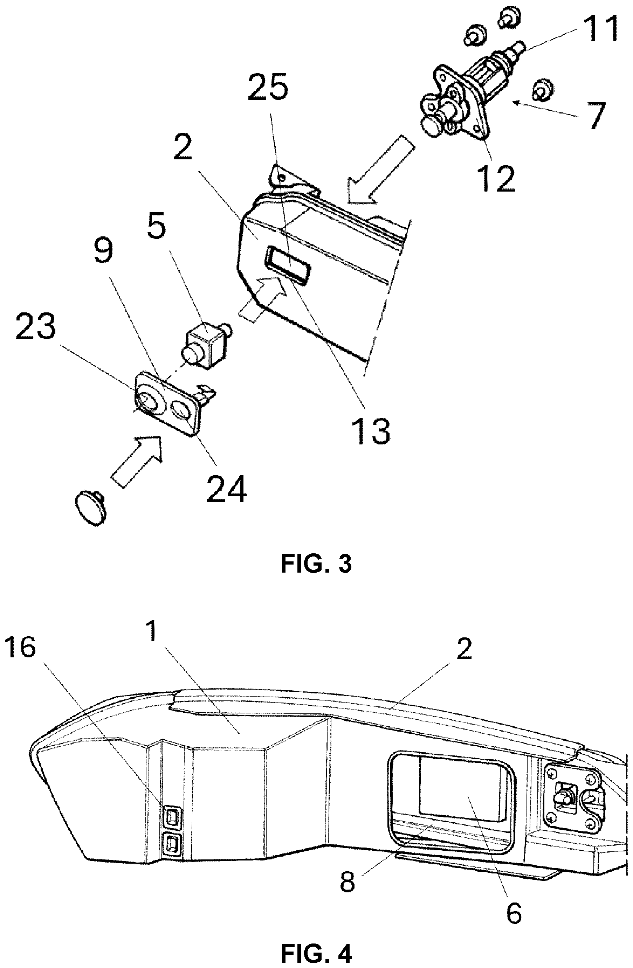

Figure 3 shows a detail of this support element 9. The support element 9 comprises a main frame, a first hole 23 and a second hole 24. The frame is suitable for being adapted to the second auxiliary opening 25 of the outer lens 2.

The camera 5 is directly fixed to the support element 9 and is arranged to access the exterior of the luminous device 10 through the first hole 23. This direct fixing is done by means of a simple mechanism of tabs, where the camera 5 is inserted. Due to the low weight of the camera 5, the simple tabs are sufficient to fit the camera 5 into position and provide a stable support to it.

The cleaning element 7 is fixed to the support element 9 and is arranged to access the exterior of the luminous device through the second hole 24.

To achieve this fixation, the cleaning element 9 comprises a main barrel 11 and an auxiliary part 12, which are assembled in the following way: the main barrel 11 is clipped to the auxiliary part 12 and the auxiliary part 12 is screwed to a secondary portion 13 of the outer lens 2.

Hence, the weight of the main barrel 11 is distributed and the system can be placed respecting the tolerances.

The second portion 13 is made of a different material from the main portion of the outer lens 2. The outer lens 2 is a multi-material injection moulding part, and this process allows a good integration between these two portions.

Figure 4 shows a rear view of the luminous device of Figure 1.

As may be seen in this figure, the housing 1 comprises a first auxiliary opening 8 covered by a detachable cap, which is not seen in this figure, so that the interior of the housing 1 may be seen. This detachable cap is designed to allow the sensor element 6 to be removed and put through it, in the event it needs repairing or replacing.

This detachable cap is attached to the first auxiliary opening 8 in a watertight manner, to maintain the properties of the luminous device 10.

As can be further seen in this image, the housing 1 comprises a main connector 16. This main connector 16 is intended to provide electric supply both to the sensor element 6 and to the heating wires (not shown in figure).

Figure 5 shows a top view of the luminous device of Figure 1, which has been cut to show some relevant elements of an embodiment of a luminous device according to the invention.

As may be seen in this figure, the outer lens 2 comprises a first face 21 facing towards the interior housing space 3 and a second face 22 opposite to the first face 21 facing towards the exterior of the luminous device 10.

The luminous device 10 further comprises a foil 14 installed on the first face 21 of the outer lens 2. This foil is made of the same material of the outer lens 2, which in this case is polycarbonate, but has a thickness which is lower than the main portion of the outer lens 2. In this particular embodiment, the foil 14 covers the whole extension of the first face 21 of the outer lens 2. This foil has different functions.

A first function is to be used as a sandwich cap to embed the heating wires 15, that are arranged between the first face 21 of the outer lens 2 and the foil 14. These heating wires 15 have a diameter of 0.15 mm and the distance between two adjacent wires is 5 mm. The foil has a thickness of 0.375 mm.

A second function is to support an opaque layer 17 installed on a portion of the foil 14, which includes the boundary of the second auxiliary opening and also includes a coverage area 18 of the sensor element 6, wherein the coverage area of the sensor element is the intersection of the wave cone emitted by the sensor element 6 and the foil 14.

This opaque layer 17 is used to prevent stray light from the luminous module of the lighting device.

In an embodiment, the opaque layer is made of a black ink which has a relative permittivity comprised between 3.95 and has a dissipation factor of 0.045. These values allow the opaque layer to prevent stray light from coming from the light sources of the luminous module and also hide the heating wires, but being transparent to the action of the sensor element 6.

### Numerical references used in the drawings

In order to provide a better understanding of the technical features of the invention, the following numerical references have been used:

| | |
|---|---|
| 1 | Housing |
| 2 | Outer lens |
| 3 | Interior housing space |
| 4 | Luminous module |
| 5 | Image acquisition element |
| 6 | Sensor element |
| 7 | Cleaning element |
| 8 | Detachable cap |
| 9 | Support element |
| 10 | Luminous device |
| 11 | Main barrel |
| 12 | Auxiliary part |
| 13 | Secondary portion |
| 14 | Foil |
| 15 | Heating wires |
| 16 | Main connector |
| 17 | Opaque layer |
| 18 | Coverage area |
| 21 | First face of the outer lens |
| 22 | Second face of the outer lens |
| 23 | First hole |
| 24 | Second hole |
| 25 | Second auxiliary opening |

## Claims

1. Luminous device (10) for an automotive vehicle, the luminous device (10) comprising:
a housing (1) comprising a main opening;
an outer lens (2) coupled with the main opening of the housing (1), wherein the housing (1) and the outer lens(2) define an interior housing space (3);
at least one luminous module (4) comprising at least one light source and arranged in the interior housing space (3);
an image acquisition element (5), wherein at least a portion of the image acquisition element (5) is arranged in the interior housing space, wherein the image acquisition element (5) comprises a focusing lens;
a sensor element (6) arranged in the interior housing space;
a cleaning element (7) configured to operate on the focusing lens of the image acquisition element (5);
wherein
the housing (1) comprises a first auxiliary opening (8) covered by a detachable cap, wherein the sensor element (6) is able to be put through the first auxiliary opening (8); and
the outer lens (2) comprises a second auxiliary opening (25), wherein the image acquisition element (5) and/or the cleaning element (7) is able to be put through the second auxiliary opening (25) and secured on the housing (1).

2. Luminous device (10) according to claim 1, wherein
the second auxiliary opening (25) is covered by a support element (9);
the support element (9) comprises a main frame suitable for being adapted to the second auxiliary opening (25), a first hole (23) and a second hole (24);
the image acquisition element (5) is fixed to the support element (9) and is arranged to access the exterior of the luminous device (10) through the first hole (23);
the cleaning element (7) is fixed to the support element (9) and is arranged to access the exterior of the luminous device through the second hole (24).

3. Luminous device (10) according to claim 2, wherein
the cleaning element (7) comprises a main barrel (11) and an auxiliary part (12);
the main barrel (11) is clipped to the auxiliary part (12); and
the auxiliary part (12) is screwed to the outer lens (2).

4. Luminous device (10) according to claim 3, wherein
the outer lens (2) is a multi-material injection moulding part, comprising a main portion and a secondary portion (13); and
the auxiliary part (12) is screwed to the secondary portion (13) of the outer lens (2).

5. Luminous device (10) according to any of the preceding claims, wherein
the outer lens (2) comprises a first face (21) facing towards the interior housing space and a second face (22) opposite to the first face (21) facing towards the exterior of the luminous device (10);
the luminous device (10) further comprises a foil (14) installed on the first face (21) of the outer lens (2);
the luminous device further comprises an opaque layer (17) installed on a portion of the foil (14);
the luminous device further comprises a plurality of heating wires (15) embedded between the first face (21) and the foil (14).

6. Luminous device (10) according to claim 5, wherein the foil has a thickness comprised between 0.35 mm and 0.4 mm.

7. Luminous device (10) according to any of claims 5 or 6, wherein the heating wires (15) have a diameter comprised between 0.1 and 0.2 mm and the distance between two adjacent wires is comprised between 4 and 6 mm.

8. Luminous device (10) according to any of claims 5 to 7, wherein the sensor element (6) is configured to emit a wave cone and the opaque layer (17) is installed on a first portion of the foil (14), wherein the first portion of the foil includes the boundary of the second auxiliary opening (25) and also includes a coverage area of the sensor element (6), wherein the coverage area of the sensor element (6) is the intersection of the wave cone emitted by the sensor element (6) and the foil (14).

9. Luminous device (10) according to any of claims 5 to 8, wherein the housing (1) comprises a main connector (16), the sensor element and the heating wires (15) being electrically connected to the main connector (16).

10. Luminous device (10) according to any of claims 5 to 8, wherein the opaque layer (17) is made of a material which has a relative permittivity comprised between 3.9 and 4.0.

11. Luminous device (10) according to any of claims 5 to 8, wherein the opaque layer (17) is made of a material which has a dissipation factor between 0.04 and 0.05.

12. Luminous device (10) according to any of the preceding claims, wherein the light source is a solid-state light source, such as a light emitting diode.

13. Luminous device (10) according to any of the preceding claims, wherein the sensor element (6) is a LiDAR or a RADAR.
